# EUROPEAN PATENT SPECIFICATION

(11) **EP 2 125 948 B1**
(45) Date of publication and mention of the grant of the patent: **22.05.2013**
(21) Application number: 07869673.9
(22) Date of filing: 20.12.2007
(51) Int. Cl.: C08L 23/12, C08K 3/34

(54) **FILLED TPO COMPOSITIONS, METHODS OF MAKING THE SAME, AND ARTICLES PREPARED FROM THE SAME**
GEFÜLLTE TPO-ZUSAMMENSETZUNGEN, VERFAHREN ZU DEREN HERSTELLUNG UND DARAUS HERGESTELLTE ARTIKEL
COMPOSITIONS DE TPO CHARGÉES, PROCÉDÉS DE FABRICATION DE CELLES-CI ET ARTICLES PRÉPARÉS À PARTIR DE CELLES-CI

(30) Priority: 21.12.2006 US 876350 P
(43) Date of publication of application: 02.12.2009
(73) Proprietor: Dow Global Technologies LLC, Midland, MI 48674 (US)
(72) Inventor: HECK, Henry, Lake Jackson, TX 77566 (US); WORKU, Anteneh, Pearland, TX 77584 (US)
(74) Representative: Hayes, Adrian Chetwynd
(86) International application number: PCT/US2007/088408
(87) International publication number: WO 2008/079998

(56) References cited:
- WO-A-02/085972
- WO-A-2004/048465
- WO-A-2007/002436

## Description

### FIELD OF THE INVENTION

This invention relates to filled thermoplastic polyolefin (TPO) compositions containing a nitrogen source, a phosphorus source, and optionally, a hydroxyl source and at least one source is derived from at least one organic compound, or salt thereof. In one aspect, this invention relates to TPO compositions comprising a highly crystalline isotactic propylene homopolymer, a high melt strength ethylene/α-olefin (EAO) elastomeric impact modifier, and a reinforcing grade of a platy filler, for example, talc. In another aspect, this invention relates to an article comprising at least one component formed from such a filled thermoplastic polyolefin composition. In another aspect, this invention relates to preparing such filled thermoplastic polyolefin composition.

### BACKGROUND OF THE INVENTION

Talc-filled TPOs can be used in injection molding applications, and other applications requiring a balance of rigidity, impact resistance at temperatures down to about -30°C, resistance to scratching and marring, and resistance to deformation at temperatures of about 100°C. The flex modulus for these grades of TPOs is typically between about 100,000 and 200,000 psi, and the HDT is typically below about 110°C.

Talc filled TPO formulations that have modulus and heat distortion temperature similar to the properties of PC/ABS have been developed. In many durable markets that utilize PC/ABS, a flame resistant grade is needed to prevent a fire from starting, for example, in the event of short circuit in an enclosed electronic device, or to prevent the spread of a fire, for example in an electronic cable tray that extends throughout a large building, and which could carry a fire originating in one room to the other rooms of the building.

Three approaches to achieving flame resistance are as follows: (1) use of halogenated systems that scavenge free radicals, reduce the heat, and result in incomplete combustions, (2) use of mineral additives that endothermically decompose to liberate non flammable gases that results in dilution of the fuel and cooling of the polymer, or (3) use of char-forming additives, such as intumescents, such as a combination of nitrogen containing and phosphorous containing, and optionally hydroxyl containing, additives, that liberate non-burning gases and a foaming char, which acts as a barrier between the flame front and the polymer surface.

The use of halogenated additives substitutes one problem for another. Although the additives may stop the spread of a fire, the heat of the flames will liberate large amounts of black smoke. The smoke presents visibility and environmental concerns, which complicate the fighting of the fire, and which may cause health and property damage, even though the fire was kept from spreading.

The use of mineral additives requires the addition of a large amount of mineral fillers. These fillers have no significant aspect ratio, and therefore act as potential defects, without any beneficial reinforcing effects.

The use of nitrogen-based and phosphorous-based organics that gas, and swell, and form a stable char, is a known means of making polyolefin systems flame retardant. However, the use of organic nitrogen-based and phosphorus-based organic compounds is costly, and typically large amounts of these compounds are needed to achieve desired results.

Cone calorimetry is a very useful tool to gain insight into how changes in polymer formulations impact the performance of the formulation, when it is exposed to flame. Cone calorimetry measures the instantaneous heat release from the sample exposed to the flame. A plot of the heat release rate allows determination of the "peak heat release rate" and the "time to peak heat release rate." Effective intumescent formulations will lower the peak heat release rate and increase the time to the peak heat release rate. However, formulations that can be developed to have a dramatically lower peak heat release rate, should require lower levels of additive to achieve a target flame retardant performance rating.

There is a need for a cost effective platy filler-filled TPO formulation with reduced heat liberation, and in which the filler can serve both as a flame retardant and as a reinforcement. Nucleated compositions containing propylene homopolymers and ethylene copolymers are disclosed in U.S. Publication 2003/0176580.

There is also a need for a filled TPO formulation containing flame retardant additives that partition into the polymer phase, leaving only the platy filler, as a dispersed solid, for its cost and for reinforcing effect. There is also a need for flame retardant, filled TPO formulations that contain lower levels of flame retardants. Some of these needs and others have been met by the following invention.

### SUMMARY OF THE INVENTION

The invention provides a polyolefin composition comprising:
A) a crystalline isotactic propylene homopolymer having a flex modulus of greater than 1930 MPa and an HDT of greater than 100°C;
B) an ethylene/α-olefin interpolymer having Tg of less than -30°C, a tan delta measured at 0.1 radians/s at 190°C of less than 2, an HDT that is greater than, or equal to, the peak melting temperature of the ethylene/α-olefin interpolymer, measured by differential scanning calorimetry, and
C) a platy filler, and
D) a nitrogen source and a phosphorus source, and wherein at least one source is derived from at least one organic compound, or a salt thereof, and
wherein the weight ratio of homopolymer:interpolymer (A:B) is between 9:1 and 6:4.

The invention also provides a composition comprising:
A) a crystalline isotactic propylene homopolymer having a flex modulus of greater than about 1930 MPa and an HDT of greater than about 100°C;
B) an ethylene/α-olefin interpolymer having Tg of less than about -30°C, a tan delta measured at 0.1 radians/s at 190°C of less than 3, and
C) a platy filler, and
D) a nitrogen source and a phosphorus source and a hydroxyl source, and wherein at least one source is derived from at least one organic compound, or a salt thereof, and
wherein the weight ratio of homopolymer:interpolymer (A:B) is between 9:1 and 6:4.

The invention provides a composition comprising the following:
A) a crystalline isotactic propylene homopolymer having a flex modulus of greater than about 1930 MPa and an HDT of greater than about 100°C;
B) an ethylene/α-olefin interpolymer having Tg of less than about -30°C, a tan delta measured at 0.1 radians/s at 190°C of less than 3, and
C) a nitrogen source and a phosphorus source and a hydroxyl source, and wherein at least one source is derived from at least one organic compound, or a salt thereof, and
wherein the weight ratio of homopolymer:interpolymer (A:B) is between 9:1 and 6:4.

### DETAILED DESCRIPTION OF THE INVENTION

It has been discovered that TPO formulations produced from very high crystallinity isotactic homopolymer polypropylene defined by flex modulus, heat distortion temperature and crystallinity index show significantly lower heat release by cone calorimetry, compared to other propylene homopolymers. It has also been discovered that high molecular weight branched elastomers, typically with high melt strength, with heat distortion temperatures greater than peak melting temperatures, and tan deltas, at 190°C and 0.1 radians per second, of less than 3, preferably less than 2.5, and more preferably less than 2, show lower heat release, as measured by cone calorimetry, compared to the partial replacement of this elastomer with a lower molecular weight, higher flow elastomer. It has also been discovered that a highly reinforcing platy filler (for example, the incorporation of 30 percent by weight of the platy filler into a PP/PE formulation) resulted in a large drop in heat release, as measured by cone calorimetry.

Some inventive compositions containing the propylene component, ethylene component and filler as discussed above, when used with a nitrogen-containing and phosphorus-containing and hydroxyl-containing additive(s), have peak heat release rates less than 250 kW/m2 and higher modulus and HDT than would have been obtained from compounds prepared from conventional polypropylenes and elastomers and at a lower level of additives than would have been required without the talc.

In particular, the invention provides a polyolefin composition comprising:
A) a crystalline isotactic propylene homopolymer having a flex modulus of greater than 1930 MPa and an HDT of greater than 100°C;
B) an ethylene/α-olefin interpolymer having Tg of less than -30°C, a tan delta measured at 0.1 radians/s at 190°C of less than 2, an HDT that is greater than, or equal to, the peak melting temperature of the ethylene/α-olefin interpolymer, measured by differential scanning calorimetry, and
C) a platy filler, and
D) a nitrogen source and a phosphorus source, wherein at least one source is derived from at least one organic compound, or salt thereof, and
wherein the weight ratio of homopolymer:interpolymer (A:B) is between 9:1 and 6:4.

In a further embodiment, the composition has a heat deflection temperature (HDT) of greater than about 100°C and flexural modulus of greater than about 1930 MPa.

In another embodiment, the ethylene/α-olefin interpolymer has a Tg of less than -40°C. In a further embodiment, the difference between the HDT and the melting point Tm of the ethylene/α-olefin interpolymer is at least 4. In another embodiment, the difference between the HDT and the melting point Tm of the ethylene/α -olefin interpolymer is at least 8. In yet another embodiment, the tan delta, measured at 190°C and 0.10 radians/second, of the ethylene/α-olefin interpolymer is 3 or less, and preferably 2 or less. In another embodiment, the tan delta, measured at 190°C and 0.10 radians/second, of the ethylene/α-olefin interpolymer is 2.5 or less, preferably 1.8 or less.

The invention also provides a composition comprising:
A) a crystalline isotactic propylene homopolymer having a flex modulus of greater than about 1930 MPa and an HDT of greater than about 100°C;
B) an ethylene/α-olefin interpolymer having Tg of less than about -30°C, a tan delta measured at 0.1 radians/s at 190°C of less than 3, and
C) a platy filler, and
D) a nitrogen source and a phosphorus source and a hydroxyl source, and wherein at least one source is derived from at least one organic compound, or a salt thereof, and
wherein the weight ratio of homopolymer:interpolymer (A:B) is between 9:1 and 6:4. In a preferred embodiment, the amount of component D required to achieve peak heat release is reduced by the presence of component C.

The invention also provides a composition comprising the following:
A) a crystalline isotactic propylene homopolymer having a flex modulus of greater than about 1930 MPa and an HDT of greater than about 100°C;
B) an ethylene/α-olefin interpolymer having Tg of less than about -30°C, a tan delta measured at 0.1 radians/s at 190°C of less than 3, and
C) a nitrogen source and a phosphorus source and a hydroxyl source, and wherein at least one source is derived from at least one organic compound, or a salt thereof, and
wherein the weight ratio of homopolymer:interpolymer (A:B) is between 9:1 and 6:4.

In one embodiment, the composition has a cone calorimeter peak heat release rate less than 300 kW/m², preferably less than 250 kW/m².

In one embodiment, the nitrogen source is derived from melamine, isocyanuric acid, an isocyanate or a triazine.

In another embodiment, the nitrogen source is derived from at least one organic compound selected from melamine, melamine cyanurate, melamine borate, melamine phosphate, melamine polyphosphate, melamine pyrophosphate, ethylene diamine, or tris(hydroxyethyl)isocyanurate.

In another embodiment, the phosphorus source is derived from at least one compound selected from a phosphate compound, a phosphinate compound, a phosphonate compound, a polyphosphate compound, or a phosphine oxide.

In another embodiment, the nitrogen source and/or the phosphorus source is derived from an amine salt of phosphoric acid, an amine salt of a polyphosphoric acid, an ammonium salt of phosphoric acid, or an ammonium salt of polyphosphoric acid.

In another embodiment, the phosphorus source is derived from at least one compound selected from ammonium polyphosphate, bis-phenol A diphenylphosphate, melamine phosphate, melamine polyphosphate, or melamine pyrophosphate.

In another embodiment, both the nitrogen source and the phosphate source are derived from at least one compound selected from ammonium polyphosphate, melamine phosphate, melamine polyphosphate, ethylenediamine phosphate, or melamine pyrophosphate.

In another embodiment, the nitrogen source is present in an amount less than 7.5 weight percent nitrogen, based on the total weight of the composition.

In another embodiment, the phosphorus source is present in an amount less than 3.8 weight percent phosphorus, based on the total weight of the composition.

In another embodiment, the nitrogen source is present in an amount less than 7.5 weight percent nitrogen, based on the total weight of the composition, and wherein the phosphorus source is present in an amount less than 3.8 weight percent phosphorus, based on the total weight of the composition.

In another embodiment, the nitrogen source, the phosphorous source and the hydroxyl source are present as a preformulated additive.

In another embodiment, the nitrogen source and the phosphorous source are present as a preformulated additive.

In another embodiment, the composition further comprises a hydroxyl containing additive.

In a further embodiment, the hydroxyl containing additive is selected from pentaerythritol, dipentaerythritol, sorbitol, or combinations thereof, and other similar compounds consisting solely of carbon, hydrogen and oxygen.

In another embodiment, the hydroxyl containing additive is selected from compounds that also have another intumescent functionality. An example would be tris hydroxylethyl isocyanurate (THEIC) which contains both amine and hydroxyl functionality.

In another embodiment, the composition comprises a tris(hydroxyethyl) isocyanurate, an ammonium polyphosphate, and a melamine polyphosphate.

In another embodiment, the inventive composition has a UL V0 rating, which is achieved at lower amounts of nitrogen source and phosphorus source, as compared to a similar composition that contains (1) a propylene homopolymer that differs from "a crystalline isotactic propylene homopolymer having a flex modulus of greater than about 1930 MPa and an HDT of greater than about 100°C" and/or (2) an ethylene/α-olefin interpolymer that differ from "an ethylene/α-olefin interpolymer having Tg of less than about -30°C, a tan delta measured at 0.1 radians/s at 190°C of less than about 2, an HDT that is greater than, or equal to, the peak melting temperature of the ethylene/α-olefin interpolymer, measured by differential scanning calorimetry."

In another embodiment, the inventive composition utilizes lower levels of the intumescent additives than is required to achieve the same cone calorimetry results without the presence of the talc.

In another embodiment, the composition further comprising at least one hydroxyl-containing compound. In a further embodiment, the hydroxyl-containing compound is selected from the group consisting of pentaerythritol, dipentaerythritol, and tris(hydroxyethyl)isocyanate.

In another embodiment, the composition further comprising at least one additive selected from the group consisting of a pigment, a scratch and mar resistant additive, and combinations thereof.

In another embodiment, the composition further comprising a rheology control additive, stearic acid, and/or a silane.

In another embodiment, the propylene homopolymer has an isotacticity index greater than 98 percent, as measured by xylene solubility.

In another embodiment, the propylene homopolymer has a flex modulus of greater than 2070 MPa, and an HDT of greater than 110°C. In a further embodiment, the propylene homopolymer has a flex modulus of greater than 2210 MPa, and an HDT of greater than 120°C.

In another embodiment, the α-olefin of the ethylene/α-olefin interpolymer is a C3-C20 α-olefin. In a further embodiment, the α-olefin of the ethylene/α-olefin interpolymer is selected from the group consisting of propylene, 1-butene, 1-hexene and 1-octene.

In one embodiment, the filler is present in an amount greater than, or equal to, 10 weight percent, based on the total weight of the composition. In another embodiment, the filler is present in an amount greater than 20 weight percent, preferably greater than 30 weight percent, based on the total weight of the composition. In another embodiment, the filler is platy talc. In another embodiment, the composition comprises 30 weight percent of talc, based on the total weight of the composition. In a further embodiment, the composition comprises at least one additive selected from the group consisting of a pigment, a scratch and mar resistance additive, and combinations thereof.

In another embodiment, the weight percent of filler, based on the "sum weight of the propylene homopolymer, the ethylene/α-olefin interpolymer and filler," is greater than the weight percent of the ethylene/α-olefin interpolymer, based on the "sum weight of the propylene homopolymer and the ethylene/α-olefin interpolymer."

In a further embodiment, the composition comprises a sufficient amount of the filler, such that the composition has a flexural modulus efficiency factor of 3 or more, and an HDT efficiency factor of 1.5 or more.

In another embodiment, the weight percent of filler, based on the "sum weight of the propylene homopolymer, the ethylene/α-olefin interpolymer and filler," is greater than the weight percent of the ethylene/α-olefin interpolymer, based on the "sum weight of the propylene homopolymer and the ethylene/α-olefin interpolymer."

In another embodiment, the composition further comprises one or more other different ethylene/α-olefin interpolymers. In a further embodiment, the weight percent of filler, based on the "sum weight of the propylene homopolymer, the ethylene/α-olefin interpolymer, the one or more other different ethylene/α-olefin interpolymers, and filler," is greater than the weight percent of the ethylene/α-olefin interpolymer and the one or more other different ethylene/α-olefin interpolymers, based on the "sum weight of the propylene homopolymer, the ethylene/α-olefin interpolymer and one or more other different ethylene/α-olefin interpolymers."

An inventive composition may comprise a combination of two or more embodiments as described herein.

The invention also provides an article comprising at least one component formed from an inventive composition.

The invention also provides a molded article, comprising at least one component formed from an inventive composition, and wherein the article is selected from the group consisting of a computer part, a building or construction material, a home appliance, a container, a piece of furniture, a footwear component, and a toy. In a further embodiment, the article is in a computer part. In another embodiment, the article is a building or construction material.

The invention also provides a molded article comprising at least one component formed from an inventive composition. In a further embodiment, the article is formed by an injection molding process.

In another embodiment, the molded article is formed from an inventive composition further comprising at least one additive selected from the group consisting of a pigment, a scratch and mar resistant additive, and combinations thereof.

An inventive article, including molded articles, may comprise a combination of two or more embodiments as described herein.

The invention also provides a method of forming an inventive composition, comprising polymerizing the polypropylene homopolymer and the ethylene/α-olefin interpolymer in separate reactors, and subsequently mixing the polypropylene homopolymer and the ethylene/α-olefin interpolymer together with the platy filler, nitrogen source and phosphate source.

The invention also provides a method of forming an inventive composition, comprising polymerizing the polypropylene homopolymer and the ethylene/α-olefin interpolymer in separate reactors, and subsequently mixing the polypropylene homopolymer and the ethylene/α-olefin interpolymer together with the platy filler, nitrogen source and phosphate source and hydroxyl source.

In another embodiment, the invention also provides a process for preparing the inventive composition utilizing co-rotating intermeshing twin screw extruder.

The invention provides a method of making an inventive composition, said method comprising mixing the components of the composition in a twin screw extruder. In a further embodiment, the nitrogen source, phosphorous source, and optionally hydroxyl source, are added to the extruder using a first side arm extruder. In another embodiment, the filler is added to the extruder using a second side arm extruder. In a further embodiment, the filler is talc.

An inventive method may comprise a combination of two or more embodiments as described herein.

Polypropylene is the primary polymeric component of the formulation, and it ultimately determines the maximum flexural modulus and HDT that can be achieved. Conventional propylene homopolymer has a flexural modulus (1 percent secant) of less than about 1520 MPa (220.4 kpsi), and an HDT of less than 90°C, and it is neither sufficiently stiff, nor does it retain its stiffness to a high enough temperature, to be useful in these compositions. To achieve the combined targets of low temperature impact resistance, improved flexural modulus (for example, greater than about 1520 Mpa, 1 percent secant), and improved HDT (for example, greater than about 90°C), and preferably low gloss, the polypropylene is a highly crystalline, isotactic homopolymer with a flexural modulus greater than 1930 MPa (280 kpsi), and an HDT greater than about 100°C. More preferred grades of highly crystalline, isotactic homopolymer have a flexural modulus greater than about 2070 MPa (300 kpsi), and an HDT greater than about 110°C. The most preferred grades of highly crystalline, isotactic homopolymer polypropylene have a flexural modulus greater than about 2210 MPa (320 kpsi) and an HDT greater than about 120°C. In one embodiment, the propylene homopolymer has a HDT greater than about 100°C, more preferably greater than about 110°C, even more preferably greater than about 120°C, and most preferably greater than about 130°C. In another embodiment, the propylene homopolymer has a flexural modulus greater than about 1930 MPa (280 kpsi), more preferably greater than about 2210 MPa (320 kpsi), and most preferably greater than about 2210 MPa (320 kpsi).

The superior resistance to low temperature impact is contributed by modification of the highly crystalline, isotactic homopolymer polypropylene with an EAO elastomeric impact modifier (or ethylene/α-olefin). To provide the needed impact resistance at -30°C, the EAO elastomeric impact modifier has a glass transition temperature (Tg) of less than -30°C, more preferably less than -40°C, and most preferably less than -50°C.

In addition, two other characteristics of the elastomeric impact modifier affect the properties of the composition. First, because the EAO elastomeric impact modifier will be above its melting point well before the highly crystalline, isotactic propylene homopolymer begins to melt, it is desirable to select a grade with an HDT significantly greater than its melting point. Table 1 below shows the delta obtained by subtracting the DSC peak melting temperature (Tm) from the HDT measured on various EAO elastomers. Preferred grades of EAO elastomeric impact modifiers have a positive delta, more preferred grades have a delta of 4 or more, even more preferred grades have a delta of 6 or more, and the most preferred grades have a delta of 8 or more.

**Table 1: Tg and Delta (HDT - Tm) Parameters of Select Impact Modifiers**

| EAO Elastomer | Target Ml, dg/min | Density, g/cc | Tg, °C | Tm, °C | Viscosity Poise @ 190°C and 0.1 rad/s | Tan Delta @ 190°C and 0.1 rad/s | HDT, °C | Delta, (HDT - Tm) |
|---|---|---|---|---|---|---|---|---|
| Engage™ 8003 | 1.0 | 0.885 | -46 | 76.50 | 99340 | 6.53 | 53.60 | -22.90 |
| Engage™ 8150 | 0.5 | 0.868 | -52 | 54.99 | 234600 | 3.28 | Fail | |
| ENR 7467 | 1.2 | 0.862 | -56 | 35.39 | 59059 | 16.29 | Fail | |
| ENR 7447 | 5.0 | 0.865 | -53 | 34.74 | 17166 | 106.91 | 49.00 | 14.26 |
| Engage™ 8200 | 5.0 | 0.87 | -53 | 59.05 | 18312 | 50.16 | Fail | |
| ENR 7270 | 0.8 | 0.88 | -44 | 63.56 | 140960 | 4.76 | 63.00 | -0.56 |
| Engage™ 8100 | 1.0 | 0.87 | -52 | 59.84 | 107900 | 6.61 | 66.20 | 6.36 |
| Engage™ 8842 | 1.0 | 0.857 | -58 | 38.41 | 111620 | 4.94 | 48.70 | 10.29 |
| ENR 7380 | < 0.3 | 0.87 | -52 | 50.30 | 582470 | 1.58 | 60.55 | 10.25 |
| ENR 7086.01 | 0.3 | 0.901 | -33 | 95.20 | 542900 | 1.32 | 39.63 | -55.57 |
| ENR 7487 | < 0.3 | 0.86 | -57 | 37.37 | 442000 | 2.1 | Fail | |

As can be seen in Table 1, the HDT becomes hard to measure as the density of the EAO drops below 0.87 g/ml. This is largely because the modulus of the elastomer is proportional to density. In addition, the peak melting temperature decreases with decreasing density, so the elastomer is much closer to its melting point. The combination results in the polymer not being stiff enough at room temperature to prevent the sag of the specimen that denotes a failure. In these cases, an estimate of the creep resistance or melt strength can be made by comparing the viscosity and tan delta at 190°C and 0.1 radians/s. ENR 7487 then falls much closer to ENR 7380 in melt strength than Engage 8150. Both ENR 7487 and ENR 7380 have twice the viscosity of Engage 8150. ENR 7487 has only a 33 percent high tan delta than ENR 7380, while that of Engage 8150 is twice as high. When impact resistance at low temperature is an important criteria, ENR 7487 may be a preferred choice.

The Engage™ elastomers are ethylene-octene copolymers, and the ENR elastomers are ethylene-butene copolymers. The Dow Chemical Company manufactures both EAO elastomers.

Second, the tan delta of the elastomer, measured at 0.1 radian per second (rad/sec) at 190°C, correlates with the gloss of the finished injection molded part. The lower the tan delta, the lower the gloss. The tan delta and the viscosity in Poise, measured at these conditions, are shown in Table 1 above. The correlation between the tan delta and the 20 degree gloss (Minolta gloss meter, ASTM D523), measured on impact modified benchmarking formulations, utilizing a number of different EAOs, is shown in Table 2 below. The data in this table is based on compounds containing a polymer blend of 70 parts by weight of J707PT (a 35 MFR Mitsui Chemicals impact copolymer polypropylene with 30 parts by weight of various EAOs available from The Dow Chemical Company). The polymer blend is tested without filler and with the addition of 10 percent, by weight, Specialty Minerals ABT-2500 platy talc. Neither the impact copolymer nor the talc meet the criteria of this invention, but they serve to demonstrate how an EAO with a low tan delta at 190°C and 0.1 radians/second can dramatically reduce the 20 degree gloss of an otherwise glossy system. This data shows that the choice of elastomer has the greatest effect on lowering the gloss of the polypropylene through the addition of filler (here talc). The polypropylene can vary widely, including both homopolymer and copolymer and both nucleated and non-nucleated polymers. High MFR polypropylene is typically very glossy, and EAO addition has some effect of lowering the gloss to a flat finish.

**Table 2: Effect of EAO with Low Tan Delta at 190°C and 0.1 rad/s on the 20 Degree Gloss**

| EAO Elastomer | Tan Delta @ 190°C and 0.1 rad/s | 20 Degree Gloss (70% Polypropylene, 30% EAO) | 20 Degree Gloss (63% Polypropylene, 27% EAO, 10% ABT 2500) |
|---|---|---|---|
| Engage™ 8003 | 6.53 | 19.4 | 20.3 |
| Engage™ 8150 | 3.28 | 14.5 | 12.4 |
| Engage™ 7467 | 16.29 | 28.6 | 23.1 |
| ENR 7447 | 106.91 | 72.7 | 45.7 |
| Engage™ 8200 | 50.16 | 70.6 | 47.5 |
| ENR 7270 | 4.76 | 16.3 | 17.6 |
| Engage™ 8100 | 6.61 | 32.2 | 27.2 |
| Engage™ 8842 | 4.94 | 37.5 | 31.5 |
| ENR 7380 | 1.58 | 8.8 | 4.1 |

The preferred grades of EAO elastomeric impact modifiers have Tg and delta properties as described above, and also have a tan delta, measured at 190°C and 0.1 radians/second, of about 3 or less, preferably 2.5 or less, more preferably 2 or less, and even more preferably of about 1.8 or less and most preferably of about 1.6 or less.

The low gloss, obtained by the use of an EAO elastomeric impact modifier with the tan delta described above, makes it possible to provide a part that is colored during the molding process through the use of a color concentrate. This mold-in-color process saves a painting step when the compound has an acceptably low gloss. Because paint is widely known to improve the resistance of the part to damage from scratching and marring, the color concentrate is frequently additionally modified with materials that decrease the surface friction and reduce the surface damage done by scratching and marring. Common additives, are silicon based materials, such as high molecular weight polydimethyl siloxanes, waxy materials that bloom to the surface, such as erucamide, and some specialty materials that contain a combination of a hard tough plastic, such as nylon, with surface active agents.

### Flame Retardant Additives

Table 3 gives a list of halogen free additives useful in the composition of the invention. Most of the flame retardants are organic based, and are thus useful for partitioning into the polymeric phase of the formulation.

In general, suitable phosphorus-containing compounds include phosphates, phosphinates, phosphonates and phosphine oxides.

**Table 3: Flame Retardant Additives**

| Phosphorous Containing Additives | |
|---|---|
| | Phosphine oxides |
| | BAPP Bisphenol A Phenyl Phosphate |
| Exolit AP760¹ | Ammonium polyphosphate (APP) |
| Melapur MP² | Melamine phosphate |
| Melapur 200² | Melamine polyphosphate |
| | Melamine pyrophosphate |
| | |

| Nitrogen Containing Additives | |
|---|---|
| Fyrol MC³ / Melapur MC XL² | Melamine cyanurate |
| | Melamine |
| Fyrol MP³ | Melamine phosphate |
| | Isocyanurates |
| | Triazine ring containing compounds |
| | Cyanuric acid |
| | |

| Hydroxyl Containing Additives | |
|---|---|
| | Pentaerythritol |
| | Dipentaerythritol |
| | Sorbitol and other CHO compounds |
| | |

| Phosphorous Plus Nitrogen | |
|---|---|
| Exolit AP760¹ | Ammonium polyphosphate (APP) |
| Melapur MP² | Melamine phosphate |
| Melapur 200² | Melamine polyphosphate |
| | Melamine pyrophosphate |
| | |
| | |

| Nitrogen Plus Hydroxyl | |
|---|---|
| | Tris(hydroxyethyl) isocyanurate |

| | |
|---|---|
| 1: Available from Clariant 2: Available from Ciba Specialty Chemicals 3: Available from Supresta | |

The table above divides the Intumescent Additives by type of functionality. When an additive contains mixed functionality it is listed under each and under the combine category. Melamine polyphosphate is therefore listed under phosphorous, nitrogen, and mixed phosphorous plus nitrogen.

### Propylene Homopolymer

The propylene homopolymer may be a linear or a nucleated homopolymer, or a combination thereof.

In one embodiment, the propylene homopolymer has a melt flow rate, MFR, greater than, or equal to, 0.1 g/10 min, preferably greater than, or equal to, 1 g/10 min, and more preferably greater than, or equal to 3 g/10 min.

In another embodiment, the propylene homopolymer has a melt index, I2, less than, or equal to 150 g/10 min, preferably less than, or equal to, 100 g/10 min, more preferably less than, or equal to, 75 g/10 min, and even more preferably less than, or equal to, 50 g/10 min.

The propylene homopolymer desirably has a melt flow rate (MFR) (230°C/2.16 kg weight) from 0.1 to 150, preferably from 1 to 100 g/10 min, more preferably from 3 to 75 g/10 min, even more preferably from 5 to 50 g/10 min. All individual values and subranges from 0.1 to 150 g/10 min are included herein and disclosed herein.

This polypropylene homopolymer also desirably has a melting point greater than 145°C. In another embodiment, the propylene component has a melting point, Tm, from 130°C to 180°C, preferably from 140°C to 170°C.

In another embodiment, the polypropylene homopolymer has a crystallization temperature, Tc, greater than, or equal to, 110°C, preferably greater than, or equal to, 120°C, and more preferably greater than, or equal to, 130°C, and most preferably greater than, or equal to, 140°C.

As here used, "nucleated" refers to a polymer that has been modified by addition of a nucleating agent such as Millad®, a dibenzyl sorbitol commercially available from Milliken. Other conventional nucleating agents may also be used. It is noted that the platy filler, such a talc, may act as a nucleator, and may make the addition of another nucleating agent unnecessary.

Polymerization processes, used to produce high melting polymers, include the slurry process, which is run at about 50-90°C and 0.5-1.5 MPa (5-15 atm), and both the gas-phase and liquid-monomer processes in which extra care must be given to the removal of amorphous polymer. The polypropylene may also be prepared by using any of a variety of single site, metallocene and constrained geometry catalysts together with their associated processes. Polymerizations may take place in a stirred tank reactor, a gas phase reactor, a single continuously stirred tank reactor and a single slurry loop reactor, and other suitable reactors.

In a preferred embodiment, the polypropylene homopolymer is prepared in a single, continuous bulk phase (condensed propylene) stirred reactor, using a Ziegler-Natta catalyst, which includes a titanium catalytic active metal species, supported on a magnesium chloride support, and suspended in a mineral oil. The suspended catalyst may be pumped directly into the reactor. Hydrogen may be used as a chain transfer agent to control molecular weight. Polymerizations may take place in a stirred tank reactor, a gas phase fluidized bed reactor, a single continuously stirred tank reactor and a single slurry loop reactor. Such polymerizations, and the resulting polypropylene homopolymers, are described in U.S. Publication No. 2005/0272858 (see also International Publication No. 2004033509), and U.S. Publication No. 2004/0122196. Each of these three applications is incorporated herein, in its entirety, by reference.

In one embodiment, the propylene homopolymer has a molecular weight distribution (Mw/Mn) from 2 to 6, more preferably from 2 to 5 and most preferably from 3 to 5. All individual values and subranges from 2 to 6 are included herein and disclosed herein. In another embodiment, the molecular weight distribution is less than, or equal to, 6, and more preferably less than, or equal to, 5.5, and more preferably less than, or equal to 5.

In one embodiment, the propylene homopolymer has a density greater than, or equal to, 0.88 g/cc, preferably greater than, or equal to, 0.89 g/cc.

In another embodiment, the propylene homopolymer has a density less than, or equal to, 0.92 g/cc, preferably less than, or equal to, 0.91 g/cc.

In another embodiment, the propylene homopolymer has a density from 0.88 to 0.92 g/cc, and preferably from 0.89 to 0.91 g/cc. All individual values and subranges from 0.88 to 0.92 g/cc are included herein and disclosed herein.

In another embodiment, the propylene homopolymer has a number average molecular weight, (Mn) from 10,000 g/mole to 200,000 g/mole, more preferably from 15,000 g/mole to 150,000 g/mole, and most preferably from 30,000 g/mole to 100,000 g/mole. All individual values and subranges from 10,000 g/mole to 200,000 g/mole are included herein and disclosed herein.

In another embodiment, the propylene homopolymer has a weight average molecular weight, (Mw) from 80,000 g/mole to 400,000 g/mole, more preferably from 100,000 g/mole to 300,000 g/mole, and most preferably from 120,000 g/mole to 200,000 g/mole. All individual values and subranges from 80,000 g/mole to 400,000 g/mole are included herein and disclosed herein.

A propylene homopolymer may comprise a combination of two or more embodiments as described herein.

### Ethylene/α-olefin Interpolymer

The compositions of the invention comprise at least one ethylene/α-olefin interpolymer, which optionally may contain a diene. "Interpolymer," as used herein, refers to a polymer having polymerized therein at least two monomers. It includes, for example, copolymers, terpolymers and tetrapolymers. It particularly includes a polymer prepared by polymerizing ethylene with at least one comonomer, typically an alpha olefin (α-olefin) of 3 to 20 carbon atoms (C3-C20), preferably 4 to 20 carbon atoms (C4-C20), more preferably 4 to 12 carbon atoms (C4-C12) and even more preferably 4 to 8 carbon atoms (C4-C8). The α-olefins include, but are not limited to, 1-butene, 1-pentene, 1-hexene, 4-methyl-1-pentene, 1-heptene, and 1-octene. Preferred α-olefins include 1-butene, 1-pentene, 1-hexene, 4-methyl-1-pentene, 1-heptene, and 1-octene. The α-olefin is desirably a C4-C8 α-olefin.

Interpolymers include ethylene/butene (EB) copolymers, ethylene/hexene-1 (EH), ethylene/octene (EO) copolymers, ethylene/alpha-olefin/diene modified (EAODM) interpolymers such as ethylene/propylene/diene modified (EPDM) interpolymers and ethylene/propylene/octene terpolymers. Preferred copolymers include EB, EH and EO copolymers.

Suitable diene monomers include conjugated and nonconjugated dienes. The nonconjugated diolefin can be a C6-C15 straight chain, branched chain or cyclic hydrocarbon diene. Illustrative nonconjugated dienes are straight chain acyclic dienes, such as 1,4-hexadiene and 1,5-heptadiene; branched chain acyclic dienes, such as 5-methyl-1,4-hexadiene, 2-methyl-1,5-hexadiene, 6-methyl-1,5-heptadiene, 7-methyl-1,6-octadiene, 3,7-dimethyl-1,6-octadiene, 3,7-dimethyl-1,7-octadiene, 5,7-dimethyl-1,7-octadiene, 1,9-decadiene and mixed isomers of dihydromyrcene; single ring alicyclic dienes, such as 1,4-cyclohexadiene, 1,5-cyclooctadiene and 1,5-cyclododecadiene; multi-ring alicyclic fused and bridged ring dienes, such as tetrahydroindene, methyl tetrahydroindene; alkenyl, alkylidene, cycloalkenyl and cycloalkylidene norbornenes, such as 5-methylene-2- norbornene (MNB), 5-ethylidene-2-norbomene (ENB), 5-vinyl-2-norbornene, 5-propenyl- 2-norbornene, 5-isopropylidene-2-norbornene, 5-(4- cyclopentenyl)-2-norbornene and 5-cyclohexylidene-2-norbornene. Preferred nonconjugated dienes include ENB, 1,4-hexadiene, 7-methyl-1,6-octadiene, and more preferably the diene is ENB. Suitable conjugated dienes include 1,3-pentadiene, 1,3-butadiene, 2-methyl-1,3-butadiene, 4-methyl-1,3-pentadiene, or 1,3-cyclopentadiene.

Although preferred interpolymers are substantially free of any diene monomer that typically induces LCB, one may include such a monomer, if costs are acceptable, and desirable interpolymer properties, such as processibility, tensile strength and elongation, do not degrade to an unacceptable level. Such diene monomers include, but are not limited to, dicyclopentadiene, NBD, methyl norbornadiene, vinyl-norbornene, 1,6-octadiene, 1,7-octadiene, and 1,9-decadiene. When added, such monomers may be added in an amount within a range from greater than zero to 3 weight percent, more preferably from greater than zero to 2 weight percent, based on interpolymer weight.

The ethylene/α-olefin interpolymers of the invention may be branched and/or unbranched interpolymers. The presence or absence of branching in the ethylene/α-olefin interpolymers, and if branching is present, the amount of branching, can vary widely, and may depend on the desired processing conditions and the desired polymer properties.

The nature of the ethylene/α-olefin (EAO) branching can vary to convenience. Preferably, the branching is long chain branching (LCB). The ability to incorporate LCB into polymer backbones has been known and practiced for many years. In U.S. Patent 3,821,143, a 1,4-hexadiene was used as a branching monomer to prepare ethylene/propylene/diene (EPDM) polymers having LCB. Such branching agents are sometimes referred to as H branching agents. U.S. Patents 6,300,451 and 6,372,847 also use various H type branching agents to prepare polymers having LCB. In U.S. patent 5,278,272, it was discovered that constrained geometry catalysts (CGC) have the ability to incorporate vinyl terminated macromonomers into the polymer backbone to form LCB polymers. Such branching is referred to as T type branching.

The '272 patent teaches such CGC are unique in their ability to incorporate large unsaturated molecules into a polymer backbone. The amount of LCB that can be incorporated by these CGC is typically from 0.01 LCB/1000 carbon atoms to 3 LCB/1000 carbon atoms (both backbone and branched carbon atoms).

Preferably, the type of LCB in the interpolymers used in the practice of this invention is T-type branching, as opposed to H-type branching. T-type branching is typically obtained by copolymerization of ethylene or other alpha olefins with chain end unsaturated macromonomers in the presence of a constrained geometry catalyst under the appropriate reactor conditions, such as those described in WO 00/26268 (U.S. equivalent, U.S. Patent 6,680,361). If extremely high levels of LCB are desired, H-type branching is the preferred method, since T-type branching has a practical upper limit to the degree of LCB. As discussed in WO 00/26268, as the level of T-type branching increases, the efficiency or throughput of the manufacturing process decreases significantly, until the point is reached where production becomes economically unviable. The T-type LCB polymers can be produced by constrained geometry catalysts, without measurable gels, but with very high levels of T-type LCB. Because the macromonomer being incorporated into the growing polymer chain has only one reactive unsaturation site, the resulting polymer only contains side chains of varying lengths, and at different intervals along the polymer backbone.

H-type branching is typically obtained by copolymerization of ethylene or other alpha olefins with a diene having two double bonds reactive with a nonmetallocene type of catalyst in the polymerization process. As the name implies, the diene attaches one polymer molecule to another polymer molecule through a diene bridge; the resulting polymer molecule resembling an H that might be described as more of a crosslink than a long chain branch. H-type branching is typically used when extremely high levels of branching are desired. If too much diene is used, the polymer molecule can form so much branching or crosslinking that the polymer molecule is no longer soluble in the reaction solvent (in a solution process), and consequently falls out of solution, resulting in the formation of gel particles in the polymer. Additionally, use of H-type branching agents may deactivate metallocene catalysts, and reduce catalyst efficiency. Thus, when H-type branching agents are used, the catalysts used are typically not metallocene catalysts. The catalysts used to prepare the H-type branched polymers in US 6,372,847 (incorporated herein in its entirety by reference) are vanadium type catalysts.

Suitable ethylene interpolymers include ENGAGE™, AFFINITY™, and NORDEL™ polymers available from The Dow Chemical Company, and VISTALON™ and EXACT™ polymers available from ExxonMobil Chemical Company, and TAFMER™ polymers available from Mitsui Chemical. Preferred ethylene interpolymers include ENGAGE™ and AFFINITY™ polymers available from The Dow Chemical Company, and VISTALON™, EXACT™ and EXCEED™ polymers available from ExxonMobil Chemical Company, and TAFMER™ polymers available from Mitsui Chemical.

In another embodiment, the ethylene/α-olefin interpolymer has a molecular weight distribution (Mw/Mn) from 1 to 5, more preferably from 1.5 to 4 and most preferably from 2 to 3. All individual values and subranges from 1 to 5 are included herein and disclosed herein.

In one embodiment, the ethylene/α-olefin interpolymer has a density greater than, or equal to. 0.80 g/cc, preferably greater than, or equal to, 0.82 g/cc, and more preferably greater than, or equal to 0.83 g/cc.

In another embodiment, the ethylene/α-olefin interpolymer has a density less than, or equal to. 0.90 g/cc, preferably less than, or equal to, 0.88 g/cc, and more preferably less than, or equal to, 0.87 g/cc.

In another embodiment, the ethylene/α-olefin interpolymer has a density from 0.80 to 0.90 g/cc, preferably from 0.82 to 0.88 g/cc, and more preferably from 0.83 to 0.87 g/cc. All individual values and subranges from 0.80 to 0.90 g/cc are included herein and disclosed herein. In another embodiment, the ethylene/α-olefin interpolymer has a density less than, or equal to, 0.875 g/cc, preferably less than, or equal to, 0.86 g/cc, and more preferably less than, or equal to, 0.85 g/cc.

In one embodiment, the ethylene/α-olefin interpolymer has a melt index, I2, greater than, or equal to, 0.05 g/10 min, preferably greater than, or equal to, 0.1 g/10 min, and more preferably greater than, or equal to 0.2 g/10 min.

In another embodiment, the ethylene/α-olefin interpolymer has a melt index, I2, less than, or equal to 10 g/10 min, preferably less than, or equal to, 5 g/10 min, and more preferably less than, or equal to, 2 g/10 min.

In another embodiment, the ethylene/α-olefin interpolymer has a melt index, I2 (190°C/2.16 kg) from 0.05 to 10 g/10 min, preferably from 0.1 to 5 g/10 min, and more preferably from 0.2 to 2 g/10 min, or 0.5 to 1 g/10 min. All individual values and subranges from 0.05 to 10 g/10 min are included herein and disclosed herein. In another embodiment, the elastomer component has a melt index, I2, of 1 g/10 min or less, preferably of 0.5 g/10 min or less, and more preferably of 0.3 g/10 min or less.

In another embodiment, the ethylene/α-olefin interpolymer has a number average molecular weight, (Mn) from 40,000 g/mole to 200,000 g/mole, more preferably from 50,000 g/mole to 150,000 g/mole, and most preferably from 60,000 g/mole to 100,000 g/mole. All individual values and subranges from 40,000 g/mole to 200,000 g/mole are included herein and disclosed herein.

In another embodiment, the ethylene/α-olefin interpolymer has a weight average molecular weight, (Mw) from 80,000 g/mole to 400,000 g/mole, more preferably from 100,000 g/mole to 300,000 g/mole, and most preferably from 120,000 g/mole to 200,000 g/mole. All individual values and subranges from 80,000 g/mole to 400,000 g/mole are included herein and disclosed herein.

In another embodiment, the ethylene/α-olefin interpolymer has a Tg less than -30°C, preferably less than -40°C, and more preferably less than -50°C.

In another embodiment, the ethylene/α-olefin interpolymer is a homogeneously branched linear or homogeneously branched substantially linear ethylene/α-olefin interpolymer. Processes for preparing homogeneous polymers are disclosed in U.S. Patent 5,206,075; U.S. Patent 5,241,031; and PCT International Application WO 93/03093. Further details regarding the production of homogeneous ethylene α-olefin copolymers are disclosed in U.S. Patent 5,206,075; U.S. Patent 5,241,031; PCT International Publication Number WO 93/03093; PCT International Publication Number WO 90/03414.

The terms "homogeneous" and "homogeneously-branched" are used in reference to an ethylene/α-olefin polymer (or interpolymer), in which the comonomer(s) is randomly distributed within a given polymer molecule, and substantially all of the polymer molecules have the same ethylene-to-comonomer(s) ratio. The homogeneously branched ethylene interpolymers include linear ethylene interpolymers, and substantially linear ethylene interpolymers.

Included amongst the homogeneously branched linear ethylene interpolymers are ethylene interpolymers,which lack long chain branching, but do have short chain branches, derived from the comonomer polymerized into the interpolymer, and which are homogeneously distributed, both within the same polymer chain, and between different polymer chains. That is, homogeneously branched linear ethylene interpolymers lack long chain branching, just as is the case for the linear low density polyethylene polymers or linear high density polyethylene polymers, made using uniform branching distribution polymerization processes, as described, for example, by Elston in U.S. Patent 3,645,992. Commercial examples of homogeneously branched linear ethylene/α-olefin interpolymers include TAFMER™ polymers supplied by the Mitsui Chemical Company and EXACT™ polymers supplied by ExxonMobil Chemical Company.

Substantially linear ethylene interpolymers used in the present invention are described in U.S. Patent Nos. 5,272,236 and 5,278,272; the entire contents of each are herein. As discussed above, the substantially linear ethylene interpolymers are those in which the comonomer is randomly distributed within a given interpolymer molecule, and in which substantially all of the interpolymer molecules have the same ethylene/comonomer ratio within that interpolymer. Substantially linear ethylene interpolymers are prepared using a constrained geometry catalyst. Examples of constrained geometry catalysts, and such preparations, are described in U.S Patent Nos. 5,272,236 and 5,278,272.

In addition, the substantially linear ethylene interpolymers are homogeneously branched ethylene polymers having long chain branching. The long chain branches have about the same comonomer distribution as the polymer backbone, and can have about the same length as the length of the polymer backbone. As discussed above, "substantially linear," typically, is in reference to a polymer that is substituted, on average, with 0.01 long chain branches per 1000 total carbons (including both backbone and branch carbons) to 3 long chain branches per 1000 total carbons.

Commercial examples of substantially linear polymers include ENGAGE™ polymers (The Dow Chemical Company), and AFFINITY™ polymers (The Dow Chemical Company).

The substantially linear ethylene interpolymers form a unique class of homogeneously branched ethylene polymers. They differ substantially from the well-known class of conventional, homogeneously branched linear ethylene interpolymers, described by Elston in U.S. Patent 3,645,992, and, moreover, they are not in the same class as conventional heterogeneous Ziegler-Natta catalyst polymerized linear ethylene polymers (for example, ultra low density polyethylene (ULDPE), linear low density polyethylene (LLDPE) or high density polyethylene (HDPE), made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

An ethylene/α-olefin interpolymer may have a combination of two or more embodiments as described herein.

### Platy Filler

Any inert material, and typically with a generally disc-like shape can be used as the platy filler in the TPO compositions of this invention. Typically and preferably, the platy filler is an inert mineral powder, for example, talc, kaolin clay or mica, and more preferably it is a platy talc. Common platy talcs and kaolin clays are identified in Tables 4 and 5, respectively. The particular grade of platy talc is selected to have sufficient reinforcing strength, so as to impart or maintain the desired flex modulus and HDT of the final composition, without exceeding the density of the polymeric resin that the composition is intended to replace. Typically, the density of a commercial grade resins is about 1.13 g/ml. For compositions made with the high crystallinity, propylene homopolymers and EAO elastomers of this invention, a filler loading of about 30 weight percent is typical, although more or less can be used as desired.

**Table 4: Common Platy Talcs**

| Product Name | Supplier | Hegman Grind | Surface Area, B.E.T. m²/g | Median Diameter, microns | Brightness |
|---|---|---|---|---|---|
| ABT 2500 | Specialty Minerals, Inc. | 5.5 | 5.5 | 2.3 average | N.A |
| HAR V3410 | Luzenac | N.A. | 16 | 2.0 | N.A. |
| Nicron 674 | Luzenac | 6.5 | 14 | 1.9 | N.A. |
| Cimpact 710 | Luzenac | 7 | N.A. | 1.7 | 91 |
| JetFil 700 | Luzenac | 6.5 | N.A. | 1.5 | 88 |
| JetFil 625 | Luzenac | 6 | N.A. | 2.2 | 88 |

**Table 5: Common Platy Kaolin Clays**

| Product Name | Supplier | Hegman Grind | Surface Area, B.E.T. m²/g | Median Diameter, microns | Brightness |
|---|---|---|---|---|---|
| Polyfil DL | J. M. Huber | 5.5 | 5.5 | 1.3 | 91 |
| Polyfil DLX | J.M. Huber | N.A. | N.A. | N.A. | N.A. |
| Kaopaque 10 | Imerys | N.A. | N.A. | N.A. | N.A. |

During the processing of the inventive compositions, it is noted that under a flow stress, the plate shaped filler will generally align parallel to the direction of the composition flow. This flow pattern helps to reduce the shrinkage of the composition in the flow direction, and makes it possible for the filler to reinforce the resulting polymeric product, increasing both the heat deflection temperature and the flexural modulus. The effectiveness of particular filler can be determined by fitting a line to data taken at various levels of filler addition. The slope of the line, in units of "percent increase in property" divided by "weight percent filler addition" is a measure of the particular filler's efficiency in increasing either heat deflection temperature or flexural modulus.

The reinforcing efficiency of the filler on the composition is evaluated by measuring the effect of a 20 weight percent addition of the filler on the flex modulus and HDT of the blend of polypropylene and EAO. A flex modulus efficiency factor, with units of percent increase in modulus to percent loading of filler, can then be calculated. This factor is relatively linear in a filler loading range from about 10 to 40 weight percent. A related heat deflection efficiency factor can similarly be calculated for each filler grade by compounding the high crystallinity isotactic propylene homopolymer and EAO elastomeric impact modifier with the reinforcing filler at 20 weight percent and without the filler. The heat deflection efficiency factor is less linear than the flex modulus efficiency factor, and more sensitive to the specific grade of polypropylene and EAO. As a result, fillers of interest are typically benchmarked at a 20 weight percent loading with the highly crystalline isotactic homopolymer and EAO elastomeric impact modifier of this invention. Preferred reinforcing filler grades, for example, platy talc, of this invention have a heat deflection efficiency factor of greater than, or equal to, about 1.5, more preferably greater than about 1.7, and most preferably greater than about 1.9, when formulated at 20 weight percent loadings in the highly crystalline isotactic propylene homopolymer and EAO elastomeric impact modifier. Simultaneously, the preferred reinforcing filler grades of this invention have a flexural modulus efficiency factor greater than about 3, more preferably greater than about 3.5 and most preferably greater than about 4.

In one embodiment, the medium particle size is from 0.1 µm to 50 µm, preferably from 0.5 µm to 25 µm, and more preferably from 1 µm to 10 µm. All individual values and subranges from 0.1 µm to 50 µm are included herein and disclosed herein.

### Preparation of Compositions

As discussed above, the TPO compositions of this invention contain at least one propylene homopolymer, at least one ethylene/α-olefin interpolymer and at least one platy filler, and a nitrogen source and a phosphorus source and, optionally, a hydroxyl source. While such compositions can be prepared by any one of a number of different processes, generally these processes fall into one of two categories, that is, post-reactor blending, in-reactor blending, or a combination thereof. Illustrative of the former are melt extruders into which two or more solid polymers are fed and physically mixed into a substantially homogeneous composition, and multiple solution, slurry or gas-phase reactors, arranged in a parallel array, and in which, the output from each is blended with one another to form a substantially homogeneous composition, which is ultimately recovered in solid form. Illustrative of the latter are multiple reactors connected in series, and single reactors charged with two or more catalysts. Preferably, the compositions are prepared by post-reactor blending.

Typically the propylene homopolymer, ethylene/α-olefin interpolymer, and nitrogen source and phosphorus source, are blended with one another, before the addition of the filler, although the filler may first be blended with one or the other of the polymers prior to the addition of the other polymer. The filler can be added neat or as a masterbatch, based on either polymer. All components of the composition are blended with one another, until a substantially homogeneous composition is obtained. Standard mixers and extruders can be used for the blending. The compositions of this invention can contain other components as well, for example, pigments, anti-oxidants, processing aids.

The TPO compositions of this invention are used in the same manner as conventional polycarbonate based and polystyrene based compositions. In particular, the compositions of this invention are well suited for the manufacture of structures used in the preparation of computer components.

### Composition

The inventive composition preferably contains from 60 to 90 weight percent, preferably from 65 to 85 weight percent, and more preferably from 70 to 75 weight percent of the propylene homopolymer, based on the sum weight of the propylene homopolymer and ethylene/α-olefin interpolmer. All individual values and subranges from 60 to 90 weight percent (polypropylene homopolymer) are included herein and disclosed herein. The inventive composition preferably contains from 10 to 40 weight percent, preferably from 15 to 37 weight percent, and more preferably fro 20 to 35 weight percent of the ethylene/α-olefin interpolymer, based on the sum weight of the propylene homopolymer and ethylene/α-olefin interpolymer. All individual values and subranges from 10 to 40 weight percent (ethylene/α-olefin interpolymer) are included herein and disclosed herein.

In one embodiment, the composition contains from 25 to 50 weight percent, preferably from 30 to 45 weight percent, and more preferably from 35 to 40 weight percent platy filler, based on the total weight of the composition. All individual values and subranges from 25 to 50 weight percent (platy filler) are included herein and disclosed herein.

In another embodiment, the composition contains from 5 to 35 weight percent of a nitrogen-containing compound, preferably from 10 to 30 weight percent, and more preferably from 15 to 25 weight percent, based on the total weight of the composition.

In another embodiment, the composition contains from 5 to 35 weight percent of a phosphorus-containing compound, preferably from 10 to 35 weight percent, and more preferably from 15 to 25 weight percent, based on the total weight of the composition.

In another embodiment, the composition has a crystallization temperature, Tc, greater than, or equal to, 110°C, preferably greater than, or equal to, 120°C, and more preferably greater than, or equal to, 130°C, and most preferably greater than, or equal to, 140°C.

In another embodiment, the composition has a HDT, as measured by ASTM D648, than, or equal to, 110°C, preferably greater than, or equal to, 120°C, and more preferably greater than, or equal to, 130°C, and most preferably greater than, or equal to, 140°C.

In another embodiment, the composition does not contain another propylene-based polymer, other than the propylene homopolymer component.

In another embodiment, the composition contains greater than, or equal to, 50 weight percent, preferably greater than, or equal to 60 weight percent, and more preferably greater than, or equal to, 70 weight percent of the propylene homopolymer, based on the total weight of the composition.

In another embodiment, the composition contains less than, or equal to, 40 weight percent, preferably less than, or equal to 35 weight percent, and more preferably less than, or equal to, 30 weight percent of the ethylene/α-olefin interpolymer, based on the total weight of the composition.

In another embodiment, the composition contains no copolymers containing only ethylene and propylene monomer units.

In another embodiment, the composition contains no styrene block copolymers.

In another embodiment, the composition contain only one ethylene/α-olefin interpolymer.

In another embodiment, the composition does not contain an EPDM polymer.

In another embodiment, the composition does not contain an EPR polymer.

In another embodiment, the composition does not contain a block copolymer.

The composition may further comprise at least one additive of the type conventionally added to polymers or polymer compositions. These additives include, for example, process oils; antioxidants; surface tension modifiers; UV stabilizers; scratch/mar additives, such as polydimethyl siloxane (PDMS) or functionalized polydimethyl siloxane or IRGASURF® SR 100 (available from Ciba Specialty Chemicals) or scratch mar formulations containing erucamide; anti-block agents; dispersants; blowing agents; linear or substantially linear EAOs; LDPE; LLDPE; lubricants; crosslinking agents such as peroxides; antimicrobial agents such as organometallics, isothiazolones, organosulfurs and mercaptans; antioxidants such as phenolics, secondary amines, phosphites and thioesters; antistatic agents such as quaternary ammonium compounds, amines, and ethoxylated, propoxylated or glycerol compounds. Functionalized polydimethyl siloxanes include, but are not limited to, hydroxyl functionalized polydimethyl siloxane, amine functionalized polydimethyl siloxane, vinyl functionalized polydimethyl siloxane, aryl functionalized polydimethyl siloxane, alkyl functionalized polydimethyl siloxane, carboxyl functionalized polydimethyl siloxane, mercaptan functionalized polydimethyl siloxane, and derivatives of the same.

The inventive compositions may also contain an additional additive. Additional additives include, but are not limited to, hydrolytic stabilizers; lubricants such as fatty acids, fatty alcohols, esters, fatty amides, metallic stearates, paraffinic and microcrystalline waxes, silicones and orthophosphoric acid esters; mold release agents, such as fine-particle or powdered solids, soaps, waxes, silicones, polyglycols and complex esters such as trimethylolpropane tristearate or pentaerythritol tetrastearate; pigments, dyes and colorants; plasticizers such as esters of dibasic acids (or their anhydrides) with monohydric alcohols such as o-phthalates, adipates and benzoates; heat stabilizers such as organotin mercaptides, an octyl ester of thioglycolic acid and a barium or cadmium carboxylate; ultraviolet light stabilizers used as a hindered amine, an o-hydroxy- phenylbenzotriazole, a 2-hydroxy, 4-alkoxyenzophenone, a salicylate, a cynoacrylate, a nickel chelate and a benzylidene malonate and oxalanilide; and zeolites, molecular sieves, anti-stat agents and other known deodorizers.

A preferred hindered phenolic antioxidant is Irganox® 1076 antioxidant, available from Ciba Specialty Chemicals. Suitable combination of additives and additive amounts, as well as the method of incorporating the additive(s) into the composition, can be selected. Typically, each of the above additives, if used, does not exceed 45 weight percent, based on total composition weight, and are advantageously from 0.001 to 20 weight percent, preferably from 0.01 to 15 weight percent and more preferably from 0.1 to 10 weight percent.

In another embodiment of the invention, an inventive composition includes at least one polydimethylsiloxane (PDMS) to improve the scratch mar resistance of the resulting product. The polydimethylsiloxane is typically present from 0.1 to 10 weight percent, based on the weight of the polymer composition. Suitable polydimethylsiloxanes include those having a viscosity at 25°C of greater than 100,000 centistokes, and more preferably from 1x10⁶ to 2.5x10⁶ centistokes. In a further embodiment, the composition also includes an ethylene homopolymer or ethylene interpolymer grafted with maleic anhydride or succinic anhydride groups, and preferably the grafted ethylene homopolymer or interpolymer comprises less than 20 percent of said composition. In yet a further embodiment, the composition also includes at least one additive, such as a plasticizer, a pigment or colorant, a UV stabilizer, or a filler. Fillers may include calcined or uncalcined fillers. Suitable fillers include, but are not limited to calcium carbonate and wollastonite. Suitable components for scratch mar resistant formulations are described in more detail in USP 5,902,854, the entire contents of which are incorporated herein by reference.

Additional scratch mar formulations useful in the compositions of the invention contain IRGASURF® SR 100 with one or more additives as described herein. A particularly suitable formulation contains an aliphatic amide in a polyethylene carrier, such as IRGASURF® SR 100 with one or more fillers, such as wollastonite, and an ethylene homopolymer or interpolymer grafted with maleic anhydride or succinic anhydride groups. Other scratch resistant polyolefin formulations are described in U.S. Publication No. 2006009554 (equivalent to WO 2006/003127), which is incorporated herein in its entirety by reference.

### Articles of the Invention

Articles can be prepared by injection molding, extrusion, extrusion followed by either male or female thermoforming, low pressure molding, compression molding.

A partial, far from exhaustive, listing of articles that can be fabricated from the compositions of the invention includes cabinetry for electrical devices such as computers, printers, monitors, stereo components; covers for power tools such as drills, screw drivers, saws, routers; building and construction components such as duct work, conduit, cable trays, vents; and in structural components of seating in movie theaters, stadiums, auditoriums, and automotive parts. A skilled artisan can readily augment this list without undue experimentation. Additional articles include extrusion profiles such as wall base profiles or kick-plates.

The parts that are produced by molding an inventive composition are excellent in moldability and mechanical strength, including excellent flexural modulus of elasticity and high temperature and low temperature impact resistance.

The parts prepared from the inventive compositions have lightweightness, and impart a design freedom due to easiness of processing. Such compositions produce parts that have enhanced rigidity, fluidity and impact resistance, while having a reduction in molding shrinkage factor and dimensional change at the time of thermal treatment in a mold. Thus, such compositions make it possible to produce injection molded parts with a decreased wall thickness and improved thermal and mechanicals properties, and improved external appearance.

The inventive compositions are sufficiently fluid at molding temperatures to fill in a mold. Overall, the inventive compositions have excellent moldability and high rigidity, and can be used to form parts with an excellent mechanical strength, impact resistance, ductility, and thermal deformation resistance. Such parts have an excellent appearance, and have reduced dimensional changes, at the time of molding, and reduced coefficients of thermal linear expansion. The compositions are capable of producing injection molded parts having a wall thickness smaller than that of the parts prepared from conventional PC/ABS resins. In addition, such parts are lighter compared to parts prepared from a polycarbonate/ABS blend. Typically, parts prepared from the inventive compositions are on the order of seven weight percent lighter compared to a polycarbonate/ABS blend.

### DEFINITIONS

Any numerical range recited herein, includes all values from the lower value and the upper value, in increments of one unit, provided that there is a separation of at least two units between any lower value and any higher value. As an example, if it is stated that a compositional, physical or other property, such as, for example, molecular weight, melt index, etc., is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (for example, 1.1, 1.5, etc.), one unit is considered to be 0.0001, 0.001, 0.01 or 0.1, as appropriate. For ranges containing single digit numbers less than ten (for example, 1 to 5), one unit is typically considered to be 0.1. These are only examples of what is specifically intended, and all possible combinations of numerical values between the lowest value and the highest value enumerated, are to be considered to be expressly stated in this application. Numerical ranges have been recited, as discussed herein, in reference to density, weight percent of component, tan delta, molecular weights and other properties.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

As discussed above, the term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The term "ethylene/α-olefin interpolymer," "ethylene polymer," or similar terms, as used herein, refers to a polymer formed from predominantly (greater than 50 mole percent) ethylene monomeric units. Mole percentage is based on the total moles of polymerizable monomers.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "nitrogen source," as used herein, refers to a compound (organic or inorganic), and preferably an organic compound, that contains one or more nitrogen atoms.

The term "phosphorus source," as used herein, refers to a compound (organic or inorganic), and preferably an organic compound, that contains one or more phosphorus atoms.

The term "hydroxyl source," as used herein, refers to a organic compound that contains one of more hydroxyl groups.

### MEASUREMENTS

By the term "MI," is meant melt index, I2 or I₂, in g/10 min, measured using ASTM D-1238-04, Condition 190°C/2.16 kg for ethylene-based polymers (majority mole percent ethylene based on total moles polymerized monomers).

By the term "MFR," is meant melt flow rate, measured using ASTM D-1238-04, Condition 230°C/2.16 kg for propylene-based polymers (majority mole percent propylene based on total moles polymerized monomers).

Density is measured in accordance with ASTM D-792-00. The density measured was a "quick density," meaning that the density was determined after 1 hour from the time of molding.

Flex Modulus, 1 percent Secant was measured in accordance with ASTM D-790 on a 5 in x ½ in x 1/8 in specimen. Injection molded conditions will vary depending upon the material being molded. TPO formulations, propylene homopolymers, and ethylene/α-olefin interpolymers are generally molded from 10 to 40 cc/sec, at melt temperatures from 190°C to 230°C.

### Heat Distortion Temperature (HDT)

This test is done on injection molded ASTM flex bars (ASTM D-790) in order to achieve the test span needed (tensile specimens have too short a neck region). Bar dimensions are 5 in x ½ in x 1/8 in. Test is done according to ASTM D-648(06). There are two load options for this test, and the data reported herein is at lower load of 66 psi (0.455 MPa). Injection molded conditions will vary depending upon the material being molded. TPO formulations, propylene homopolymers, and ethylene/α-olefin interpolymers are generally molded from 10 to 40 cc/sec, at melt temperatures from 190°C to 230°C.

### Tan Delta

This test is a melt test done on disks cut from a 1/8 inch thick specimen, typically from an injection molded ASTM D-790 tensile dog bone specimen. The sample was placed between the two parallel plates of a dynamic mechanical spectrometer such as an RMS-800 or ARES from Rheometrics.

Injection molded conditions will vary depending upon the material being molded. TPO formulations, propylene homopolymers, and ethylene/α-olefin interpolymers are generally molded from 10 to 40 cc/sec, at melt temperatures from 190°C to 230°C.

The tan delta test temperature is done at 190°C. Polymer viscosity is conveniently measured in poise (dyne-second/square centimeter (cm²), at shear rates within a range of from 0.1 radians per second (rad/sec) to 100 rad/sec, and at 190°C, under a nitrogen atmosphere, using a dynamic mechanical spectrometer such as an RMS-800 or ARES from Rheometrics. Tan delta values at 0.1 radians per second, at 190°C, were referenced.

### Gel Permeation Chromatography

The average molecular weights and molecular weight distributions for ethylene-base polymers were determined with a gel permeation chromatographic system, consisting of a Polymer Laboratories Model 200 series high temperature chromatograph. The column and carousel compartments were operated at 140°C for polyethylene-based polymers. The columns used, were three Polymer Laboratories 10-micron Mixed-B columns. The solvent was 1,2,4 trichlorobenzene. The samples were prepared at a concentration of 0.1 gram of polymer in 50 milliliters of solvent. The solvent, used as the mobile phase, and to prepare the samples, contained 200 ppm of butylated hydroxytoluene (BHT). Ethylene-base polymers were prepared by agitating lightly for 2 hours at 160°C, and propylene-base polymers were dissolved for 2.5 hours. The injection volume was 100 microliters, and the flow rate was 1.0 milliliters/minute. Calibration of the GPC column set was performed with narrow molecular weight distribution polystyrene standards, purchased from Polymer Laboratories (UK), with molecular weights ranging from 580 to 8,400,000. The polystyrene standard peak molecular weights were converted to polyethylene molecular weights using the following equation (as described in Williams and Ward, J. Polym. Sci., Polym. Let., 6, 621 (1968)):

Mpolyethylene = A x (Mpolystyrene)^{B},

where M is the molecular weight, A has a value of 0.4315 and B is equal to 1.0.

Polyethylene equivalent molecular weight calculations were performed using Viscotek TriSEC software Version 3.0. The molecular weights for polypropylene-based polymers can be determined using Mark-Houwink ratios according to ASTM D6474.9714-1, where, for polystyrene a = 0.702 and log K = -3.9, and for polypropylene, a = 0.725 and log K = -3.721. For polypropylene-based samples, the column and carousel compartments were operated at 160°C.

### Differential Scanning Calorimetry

Differential Scanning Calorimetry (DSC) can be used to measure crystallinity in polyethylene (PE) based samples and polypropylene (PP) based samples. A sample is pressed into a thin film at a temperature of 190°C. About five to eight milligrams of film sample is weighed and placed in a DSC pan. The lid is crimped on the pan to ensure a closed atmosphere. The sample pan is placed in a DSC cell, and then heated, at a rate of approximately 10°C/min, to a temperature of around 180-200°C for PE (230°C for PP). The sample is kept at this temperature for three minutes. Then the sample is cooled at a rate of 10°C/min to -90°C for PE (-90°C for PP), and kept isothermally at that temperature for three to five minutes. The sample is next heated at a rate of 10°C/min until complete melting (second heat; around 180°C for PE and 230°C for PP). Unless otherwise stated, melting point(s) (Tₘ) and glass transition temperature (Tg) of each polymer sample is determined from the second heat curve obtained from DSC, as described above. The crystallization temperature (T_{c}) is measured from the first cooling curve.

The following examples illustrate, but do not, either explicitly or by implication, limit the present invention. Unless otherwise indicated, all parts and percentages are by weight.

### Cone Calorimetry

All TPO formulations were either injection molded to give "4 in x 6 in x 1/16 in plaques," or for screening purposes, compression molded to give "4 in x 4 in x 1/16 in" plaques. The injection molded plaques were then cut to give "4 in x 4 in x 1/16 in" plaques for cone calorimeter testing. Examples of injection molding conditions are provided in the experimental section. Triplicate measurements were performed, and the average data is reported.

Cone Calorimeter experiments were conducted on a FTT Cone Calorimeter at a heat flux of 35 kW/m² and exhaust flow of 24 L/s, using the standardized cone calorimeter procedure (ASTM E-1354-99). Data collected was calculated using a specimen surface area of 100 cm².

The cone calorimeter can generate several useful data streams regarding the flammability of a material. One of the parameters, the heat release rate (HRR), can be very useful in understanding the flammability of a material, and it can be used to differentiate the flammability of different materials. Compositions with lower Heat release rate are in general more fire safe. Some of the flammability data collected from the cone calorimeter is summarized, including time to ignition (Tig), peak heat release rate (Peak HRR), total heat evolved and time to peak HRR.

### EXPERIMENTAL

Polymers and additives used in the cone calorimetry study are shown below.

PP21 = a highly crystalline isotactic homopolymer polypropylene with an isotacticity index of 99 and an MFR of 35 grams per 10 minutes.

PP02 = a highly crystalline isotactic homopolymer polypropylene with an isotacticity index of greater than 98, and an MFR of 2 grams per 10 minutes.

PPRN = a conventional isotactic homopolymer polypropylene with an isotacticity index of less than 96 and an MFR of 35 grams per 10 minutes.

ENR 7380 = random ethylene/1-butene copolymer prepared using a constrained geometry catalyst (available from the Dow Chemical Company); density = 0.87 g/cc; MI = < 0.3 g/10 min.

ENR 7487 = random ethylene/1-butene copolymer prepared using a constrained geometry catalyst (available from the Dow Chemical Company); density = 0.86 g/cc; MI = < 0.3 g/10 min.

PE02 = random ethylene/1-octene copolymer prepared using a constrained geometry catalyst; density = 0.89 g/cc; MI = 500 g/10 min.

JETFILL 700C = reinforcing grade of high purity (greater than 98 percent talc) platy talc with a median particle size of 1.5 microns (Available from Luzenac).

CELSPAN 625 = a flame retardant TPO formulation prepared by Phoenix Plastics.

EXOLIT AP760 = Formulated ammonium polyphosphate (available from Hoechst Chemical Co.).

Cone calorimetry results are shown in Tables 4-5. Provided below are definitions for the noted calorimetry parameters. Each sample (14-16 grams; 4x4 sq. in. sample) noted in these Tables was tested using cone calorimetry.

HRR (Heat Release Rate) = amount of heat generated per square meter of sample.

Tig (Time to Ignition) = time needed for the sample to ignite.

Time to Peak = time needed for the sample to reach peak HRR.

Total Heat Release = amount of heat generated by the test sample during the entire test (from ignition to extinction).

Ave MLR (Average Mass Loss Rate) = gram material lost per sq. meter.

Ave EHC (Average Effective Heat of Combustion) = amount of heat generated per kilogram of material.

Cone calorimetry results are shown in the tables below. Provided below are definitions for the noted calorimetry parameters. Each sample (14-16 grams; 4x4 sq. in. sample, thickness of 1/16 in) noted in these tables was tested using cone calorimetry.

HRR (Heat Release Rate) = amount of heat generated per square meter of sample.

Tig (Time to Ignition) = time needed for the sample to ignite.

Time to Peak = time needed for the sample to reach peak HRR.

Total Heat Release = amount of heat generated by the test sample during the entire test (from ignition to extinction).

Ave MLR (Average Mass Loss Rate) = gram material lost per sq. meter.

Ave EHC (Average Effective Heat of Combustion) = amount of heat generated per kilogram of material.

**Table 6: Cone Calorimeter Measurements**

| Sample* | | | | | | | |
|---|---|---|---|---|---|---|---|
| | Run 1 | Run 10 | Run 9 | Run 12 | Run 2 | Run 4 | Run 7 |
| | | | | | | | |
| PP21 (wt%) | 65 | | 100 | 61.75 | 56 | 48 | |
| PPRN (wt%) | | 100 | | | | | 45.5 |
| ENR 7380 (wt%) | 35 | | | 33.25 | 24 | 32 | 24.5 |
| PE02 (wt%) | | | | | | | |
| Jetfil 700C (wt%) | 0 | | | 5 | 20 | 20 | 30 |
| Total | 100 | 100 | 100 | 100 | 100 | 100 | 100 |
| Elastomer content of polymer (wt%) | | | | 0.35 | 0.3 | 0.4 | 0.35 |
| Sample size (cm²) | 100 | 100 | 100 | 100 | 100 | 100 | 100 |
| Peak HRR (kW/m²) | 1761 | 1742.44 | 1701.21 | 1399.17 | 1198 | 1182.96 | 828.17 |
| Avg HRR (kW/m²) | 708 | | | | | | |
| Time to Ignition (sec) | 37.7 | 38 | 35 | 39.3 | 41 | 41.7 | 46.7 |
| Time to Peak HRR | 92.7 | 96.7 | 96 | 98.7 | 94 | 96 | 92.7 |
| Time to Peak HRR - Tig | 55 | 58.7 | 61 | 59.4 | 53 | 54.3 | 46 |
| Total Heat Release (MJ/m²) | 60.18 | 61.07 | 62.18 | 59.12 | 55.9 | 54.61 | 51.54 |
| Ave MLR (g/s.m²) | 25.2 | 23.6 | 24.6 | 21 | 22.8 | 22.4 | 16.5 |
| Ave EHC (MJ/Kg) | 43.31 | 43 | 43.35 | 43.75 | 43.33 | 43.04 | 42.83 |
| Flexural Modulus, 1% Secant (ksi) | 148 | 248 | 306 | 182 | 318 | 237 | 277 |

| | | | | | | | |
|---|---|---|---|---|---|---|---|
| *Weight percentages are based on the total weight of the composition ● All Samples Run at 35 kw/m² heat flux ; All Samples extruded and injection molded at 230°C | | | | | | | |

**Table 7: Cone Calorimeter Measurements**

| | | | | | |
|---|---|---|---|---|---|
| Sample* | Run 5 | Run 8 | Run 3 | Run 6 | CELSPAN 625** |
| PP21 (wt%) | 36 | 45.5 | 42 | 45.5 | |
| PPRN (wt%) | | | | | |
| ENR 7380 (wt%) | 24 | 21 | 18 | 24.5 | |
| PE02(wt%) | | 3.5 | | | |
| Jetfil 700C (wt%) | 40 | 30 | 40 | 30 | |
| Total | 100 | 100 | 100 | 100 | |
| | | | | | |
| Elastomer content of polymer (wt%) | 0.4 | 0.3 | 0.3 | 0.35 | |
| Sample size (cm²) | 100 | 100 | 100 | 100 | 79.03 |
| Peak HRR (kW/m²) | 721.43 | 695.82 | 690.65 | 665.96 | 199.77 |
| Avg HRR (kW/m²) | | | | | |
| Time to Ignition (sec) | 47 | 47.3 | 46.3 | 47.3 | 35.5 |
| Time to Peak HRR | 96.7 | 90.7 | 95.3 | 96 | 230.5 |
| Time to Peak HRR - Tig | 49.7 | 43.4 | 49 | 48.7 | 195 |
| Total Heat Release (MJ/m²) | 48.28 | 51.78 | 48.74 | 51.37 | 42.56 |
| Ave MLR (g/s.m²) | 14 | 13.3 | 13.8 | 13.5 | 4.1 |
| Ave EHC (MJ/Kg) | 41.83 | 42.57 | 42.24 | 42.32 | 32.99 |
| Flexural Modulus, 1% Secant (kpsi) | 291 | 323 | | 323 | |
| | | | | | |
| All Samples tested at 35 kw/m² heat flux | | | | | |
| All Samples extruded and injection molded at 230°C (melt temperature) | | | | | |
| **Compression molded; smaller size (3.5in x 3.5in); 4 samples tested due to data scatter. CELSPAN is a fully formulate polymer composition sold for its flame retardant properties. | | | | | |

| | | | | | |
|---|---|---|---|---|---|
| * Weight percentages are based on the total weight of the composition | | | | | |

There are several major effects. First, the addition of 30 percent by weight talc, reduces the peak heat release rate from a value above 1700 kW/m² to below 700 kW/m². Next, the TPO containing the 35 percent high melt strength elastomer (Run 1) has a peak HRR (Heat Release Rate) of only 60 kW/m² higher than the neat high crystallinity homopolymer PP (Run 9). Third, the 30 percent talc filled TPO based on high crystallinity PP (Run 6) is 160 kW/m² lower than the peak HRR of that based on convention homopolymer PP (Run 7), which showed a 20 percent reduction. Run 7 (conventional homopolymer polypropylene) has a modulus that is nearly 50 ksi lower than the modulus of Run 6; this is a 14 percent reduction in modulus.

Additional compositions containing intumescent additives are shown in Table 8. The amount of each components of each example composition is presented in weight percent, based on the total weight of the composition.

Compositions were produced using the KOBELCO STEWART BOLLING INC. OM Laboratory Mixer. The polymer was added at 100 RPM to the mixer, and allowed to flux. Upon melting, after about four minutes of fluxing, the RPM was reduced to 30, and the talc was added. Once all the talc was added, the RPM was increased to 100 for mixing, yet reduced as needed, to maintain the temperature below 160°C. After two minutes of mixing at 160 °C, the intumescent additives were added, while varying the RPM from 100 to 80, to control the temperature of the melt. Once all the formulation components were added to the mixer, the final formulation was allowed to mix for a full three minutes, while the RPM was continually adjusted to maintain the melt temperature at 160°C. The total mixing time was approximately 11 minutes. The intumescent additives may be added to the formulation as separate additives, or as a dry mixture, to the mixer.

Each final composition was injection molded using an ARBURG ALLROUNDER 370°C injection molder, with 80 tons clamping pressure. The melt temperature was 230°C and the mold temperature was 60°C. The four heating zones were operated to achieve a melt temperature of 230°C. The extruder RPM was 30, and the back pressure was 15 bar. The injection speed was 15-20 cc/sec, and the injection pressure for all samples prepare from PP21 was around 600 bar, and the hold pressure was around 500 bar. The hold time was 30 seconds, the cooling time was 30 seconds. Under these molding conditions some "tiger striping" was observed. To resolve the "tiger striping" in later runs, the mold temperature was increased to 160°F (71°C) and the injection rate was decreased to 10 cc/sec. When a higher viscosity polypropylene homopolymer is used, such as PP02 (MFR = 2 g/10 min), the mold temperature was increased to 180°F (82°C). The dimensions of the injection molded plaques were 4 in x 6 in x 1/16 in.

Flame retardant (FR) characteristics, as measured cone calorimetry as discussed above, were measured on the injection molded plaques. Results are shown in Table 8 below.

**Table 8 - Combined Effect of Talc and Intumescent Additives**

| Form. # | 66-1 | 66-2 | 66-4 | 66-5 | 66-6 | 66-7 | 66-8 | CELSPAN 625 |
|---|---|---|---|---|---|---|---|---|
| PP21 | 56.00% | 39.20% | 56.00% | 39.20% | 35.30% | 50.40% | 35.30% | |
| ENR 7380 | 24.00% | 16.80% | 24.00% | 16.80% | 15.10% | 21.60% | 15.10% | |
| JetFil 700C | 0.00% | 30.00% | 0.00% | 30.00% | 30.00% | 0.00% | 30.00% | |
| Melapur 200 | 20.00% | 14.00% | | | | 5.30% | 3.70% | |
| EXOLIT AP760 | | | 12.50% | 8.80% | 12.30% | 17.50% | 12.30% | |
| THEIC | | | 3.80% | 2.60% | 3.70% | 5.30% | 3.70% | |
| Melamine | | | 1.90% | 1.30% | 1.80% | | | |
| Cyanuric acid | | | 1.88% | 1.31% | 1.84% | | | |
| Sample size (cm²) | 102.01 | 102.01 | 102.01 | 102.01 | 102.01 | 102.01 | 102.01 | 102.01 |
| Peak HRR (kW/m²) | 648.6 | 385.9 | 434.6 | 380.5 | 445.6 | 143.9 | 444.9 | 198.1 |
| Time to Peak HRR (sec) | 102 | 101 | 153 | 77 | 91 | 232 | 86 | 225 |
| Flexural Modulus. 1% Secant (kpsi) | 214 | 388 | 184 | 284 | 309 | 218 | 307 | 175 |

As shown from Table 8, the inventive compositions showed good modulus and sample 66-7 showed excellent flame retardant properties under the stringent calorimetry test employed. Even without talc, sample 66-7 had very good modulus (25 percent improvement over the CELSPAN sample) and excellent flame retardant properties.

The intumescent additives of sample 66-7 were prepared as a three component mixture. This premixed mixture, Additive A, is shown below in Table 9. Ratios are in weight percent.

**Table 9: Additive A**

| | |
|---|---|
| 18.75% | Melapure 200 |
| 62.50% | AP 760 |
| 18.75% | Tris Hydroxy Ethyl Iso Cyanurate (THEIC) |

### Preparation of Inventive Compositions using a Twin Screw Extruder

Composition were compounded on a twin screw extruder, since such offers the greatest flexibility in achieving high output while simultaneously controlling melt temperature and the type and amount of applied shear. To demonstrate the feasibility of preparing these formulations on a twin screw extruder, two formulations (3 and 4) were selected and produced in a two-step process. The formulations are shown below in Table 10.

**Table 10: Compounded Formulations**

| | 3 | 4 |
|---|---|---|
| PP21 | 51.8 | |
| PP02 | | 45.3 |
| ENR 7487 | 13 | 19.4 |
| Cimpact 710 | 10 | 10 |
| Additive B | 25.2 | 25.2 |

In the first step, the high crystallinity polypropylene (PP21 or PP02), the high melt strength elastomer (ENR 7487), and the reinforcing talc (Cimpact 71.0) were compounded as polymeric concentrates to form a TPO formulation. In a second pass of the TPO formulation through the extruder, an Additive B, containing a nitrogen source, a phosphorus source and a hydroxyl source, was added to the TPO formulation using a side arm extruder. This side arm extruder was located about half way between the feed and the die. The conditions for these two compounding runs are shown below. One skilled in the art would recognize that use of a second side-arm extruder closer to the die of the main compounding extruder would allow this two step process to be reduced to a single step.

To avoid contact of the hot polymer with water, the strands extruded from the die of the extruder were cooled by running them over a chilled three roll stack, which is normally utilized to cool and control the thickness of an extruded sheet. The cooling water in the rolls of the three roll stack was set a 70°F.

### Pre-compound Conditions - First Pass through Extruder

Barrel Temperatures (°C): 140. 200. 200, 200, 200, 200, 200, 200
500 RPM
50 lb/hr
Feed talc with side-aim extruder that enters main barrel at half way point
Pre-dry TPO in vacuum oven
Vacuum devolatization at 20 inches Hg

**Twin Screw Extruder Conditions for Additive B - Second Pass through Extruder**
Barrel temperature (°C): 140, 210, 180, 170, 170, 170, 170, 170
200 RPM
30 lb/hr
Feed Additive B with side-arm extruder
Vacuum devolatization at 20 inches Hg
Cool strands on 3 roll stack prior to cutting strands

Each sample (3 and 4) were injection molded into plaques (4 in x 6 in x 1/16 in) as discussed above, and then analyzed by cone calorimetry as discussed above. The results are shown below in Table 11. The Flexural, 1 percent Secant Modulus of sample 3, based on modeling techniques known in the art, should be around 396 kpsi. The Flexural, 1 percent Secant Modulus of sample 4, based on modeling techniques known in the art, should be around 292 kpsi.

**Table 11: Cone Results**

| | 3 | 4 |
|---|---|---|
| PP21 | 51.8 | |
| PP02 | | 45.3 |
| ENR 7487 | 13 | 19.4 |
| Cimpact 710 | 10 | 10 |
| Additive B | 25.2 | 25.2 |
| Avg. Peak HRR (kW/m2) | **206** | **215** |

Another formulation (sample 5) was prepared in a heated lab mixer, a RHEOMIX 3000, with CAM style blades. This formulation is shown in Table 12. This mixer was attached to a RS500 Torque Rheometer drive unit controlled by PC-based/data acquisition software (SYSTEM 5). This software was designed to operate the RS 5000 drive. The mixer temperature was set at 170°C, and the RPM was reduced to 10 when adding formulation components, and 55 when mixing the components.

The polymer components were added to the heated mixture rotating at 10 RPM. The speed was increased to 55 RPM to obtain a good polymer flux. Additives were added at intervals, and ram was closed to mix, and mixing was continued the final composition was well mixed. The total mixing time was 15 minutes. The composition was discharged and granulated in a lab scale granulator.

Sample 5 was injection molded into plaques (4in x 6 in x 1/16 in) as discussed above, and then analyzed by cone calorimetry as discussed above. The results are shown below in Table 12. The Flexural, 1 percent Secant Modulus of sample 5, based on modeling techniques known in the art, should be around 396 kpsi.

**Table 12**

| SAMPLE | 5 |
|---|---|
| PP02 | 52 |
| ENR 7380 | 13 |
| Cimpact 710C | 10 |
| Additive B | 25.2 |
| Avg. Peak HRR (kW/m²) | 198 |

In the "additive-free" compositions, the high crystalline isotactic homopolymer polypropylene, and the high molecular weight, branched elastomer show improved cone calorimeter results, as compared to conventional polymers used in TPO formulations. In addition, the incorporation of highly reinforcing filler, such as talc, to such polymers (highly crystalline PP, etc.) provides significant improvement in the cone calorimetry properties. Compositions have been prepared on lab mixers that have incorporated talc, thereby reducing the demand for additives to achieve low peak heat release rates. Scale-up preparations using a high speed, twin screw extruder resulted in a very consistent low cone calorimeter results at 10 percent talc. At a 10 percent talc level, the total amount of intumescents was lowed by 10 percent of what would be required for the same calorimeter results in a neat formulation (without talc).

Although the invention has been described in certain detail through the preceding specific embodiments, this detail is for the primary purpose of illustration.

## Claims

1. A polyolefin composition comprising:
A) a crystalline isotactic propylene homopolymer having a flex modulus of greater than 1930 MPa and an HDT of greater than 100°C;
B) an ethylene/α-olefin interpolymer having Tg of less than -30°C, a tan delta measured at 0.1 radians/s at 190°C of less than 2, an HDT that is greater than, or equal to, the peak melting temperature of the ethylene/α-olefin interpolymer, measured by differential scanning calorimetry, and
C) a platy filler; and
D) a nitrogen source and a phosphorus source, wherein at least one source is derived from at least one organic compound, or salt thereof, and
wherein the weight ratio of hompolymer:interpolymer (A:B) is between 9:1 and 6:4.

2. The composition of claim 1, wherein the composition has a heat deflection temperature (HDT) of greater than 100°C and flexural_modulus of greater than 1930 MPa.

3. The composition of claim 1, wherein the nitrogen source is derived from melamine, isocyanuric acid, an isocyanate or a triazine.

4. The composition of claim 1, wherein the nitrogen source is derived from at least one organic compound selected from the group consisting of melamine, melamine cyanurate, melamine borate, melamine phosphate, melamine polyphosphate, melamine pyrophosphate, ethylene diamine, and tris(hydroxyethyl)isocyanurate.

5. The composition of claim 1, wherein the phosphorus source is derived from at least one compound selected from the group consisting of ammonium polyphosphate, bis-phenol A diphenylphosphate, melamine phosphate, melamine polyphosphate and melamine pyrophosphate.

6. The composition of claim 1, wherein both the nitrogen source and the phosphate source are derived from at least one compound selected from the group consisting of ammonium polyphosphate, melamine phosphate, melamine polyphosphate, ethylenediamine phosphate and melamine pyrophosphate.

7. The composition of claim 1, further comprising at least one hydroxyl-containing compound.

8. The composition of claim 7, wherein the hydroxyl-containing compound is selected from the group consisting of pentaerythritol, dipentaerythritol, and tris(hydroxyethyl)isocyanate.

9. The composition of claim 1, wherein the weight percent of filler, based on the "sum weight of the propylene homopolymer, the ethylene/α-olefin interpolymer and filler," is greater than the weight percent of the ethylene/α-olefin interpolymer, based on the "sum weight of the propylene homopolymer and the ethylene/α-olefin interpolymer".

10. The composition of any of the preceding claims, wherein the phosphorus source is derived from at least one compound selected from the group consisting of a phosphate compound, a phosphinate compound, a phosphonate compound, a polyphosphate compound, and phosphine oxide.

11. The composition of any of the preceding claims, wherein the nitrogen source and/or the phosphorus source is derived from an amine salt of phosphoric acid, an amine salt of a polyphosphoric acid, an ammonium salt of phosphoric acid, or an ammonium salt of polyphosphoric acid.

12. The composition of any of the preceding claims, wherein the nitrogen source is present in an amount less than 7.5 weight percent nitrogen, based on the total weight of the composition.

13. The composition of any of the preceding claims, wherein the phosphorus source is present in an amount less than 3.8 weight percent phosphorus, based on the total weight of the composition.

14. An article comprising at least one component formed from the composition of any of claims 1 to 9.

15. A composition comprising the following:
A) a crystalline isotactic propylene homopolymer having a flex modulus of greater than 1930 MPa and an HDT of greater than 100°C;
B) an ethylene/α-olefin interpolymer having Tg of less than -30°C, a tan delta measured at 0.1 radians/s at 190°C of less than 3, and
C) a nitrogen source and a phosphorus source and a hydroxyl source, and wherein at least one source is derived from at least one organic compound, or a salt thereof, and
wherein the weight ratio of homopolymer:interpolymer (A:B) is between 9:1 and 6:4.

## Patentansprüche

1. Eine Polyolefinzusammensetzung, beinhaltend:
A) ein kristallines isotaktisches Propylenhomopolymer mit einem Biegemodul von mehr als 1930 MPa und einer HDT von mehr als 100 °C;
B) ein Ethylen/α-Olefin-Interpolymer mit einer Tg von weniger als -30 °C, einem Tan-Delta, gemessen bei 0,1 rad/s bei 190 °C von weniger als 2, einer HDT von mehr als oder gleich der Höchstschmelztemperatur des Ethylen/a-Olefin-Interpolymers, gemessen mittels Differentialscanningkalorimetrie, und
C) einen plattigen Füllstoff; und
D) eine Stickstoffquelle und eine Phosphorquelle, wobei mindestens eine Quelle von mindestens einer organischen Verbindung oder einem Salz davon abgeleitet ist, und
wobei das Gewichtsverhältnis von Homopolymer zu Interpolymer (A:B) zwischen 9:1 und 6:4 liegt.

2. Zusammensetzung gemäß Anspruch 1, wobei die Zusammensetzung eine Wärmeformbeständigkeitstemperatur (HDT) von mehr als 100 °C und ein Biegemodul von mehr als 1930 MPa aufweist.

3. Zusammensetzung gemäß Anspruch 1, wobei die Stickstoffquelle von Melamin, Isocyanursäure, einem Isocyanat oder einem Triazin abgeleitet ist.

4. Zusammensetzung gemäß Anspruch 1, wobei die Stickstoffquelle von mindestens einer organischen Verbindung abgeleitet ist, die ausgewählt ist aus der Gruppe, bestehend aus Melamin, Melamincyanurat, Melaminborat, Melaminphosphat, Melaminpolyphosphat, Melaminpyrophosphat, Ethylendiamin und Tris(hydroxyethyl)isocyanurat.

5. Zusammensetzung gemäß Anspruch 1, wobei die Phosphorquelle von mindestens einer Verbindung abgeleitet ist, die ausgewählt ist aus der Gruppe, bestehend aus Ammoniumpolyphosphat, Bisphenol-A-diphenylphosphat, Melaminphosphat, Melaminpolyphosphat und Melaminpyrophosphat.

6. Zusammensetzung gemäß Anspruch 1, wobei sowohl die Stickstoffquelle als auch die Phosphatquelle von mindestens einer Verbindung abgeleitet sind, die ausgewählt ist aus der Gruppe, bestehend aus Ammoniumpolyphosphat, Melaminphosphat, Melaminpolyphosphat, Ethylendiaminphosphat und Melaminpyrophosphat.

7. Zusammensetzung gemäß Anspruch 1, ferner beinhaltend mindestens eine Hydroxyl enthaltende Verbindung.

8. Zusammensetzung gemäß Anspruch 7, wobei die Hydroxyl enthaltende Verbindung ausgewählt ist aus der Gruppe, bestehend aus Pentaerythrit, Dipentaerythrit und Tris(hydroxyethyl)isocyanat.

9. Zusammensetzung gemäß Anspruch 1, wobei das Gewichtsprozent des Füllstoffs, bezogen auf das "Summengewicht des Propylenhomopolymers, des Ethylen/α-Olefin-Interpolymers und Füllstoffs", größer als das Gewichtsprozent des Ethylen/α-Olefin-Interpolymers, bezogen auf das "Summengewicht des Propylenhomopolymers und des Ethylen/α-Olefin-Interpolymers", ist.

10. Zusammensetzung gemäß einem der vorhergehenden Ansprüche, wobei die Phosphorquelle von mindestens einer Verbindung abgeleitet ist, die ausgewählt ist aus der Gruppe, bestehend aus einer Phosphatverbindung, einer Phosphinatverbindung, einer Phosphonatverbindung, einer Polyphosphatverbindung und Phosphinoxid.

11. Zusammensetzung gemäß einem der vorhergehenden Ansprüche, wobei die Stickstoffquelle und/oder die Phosphorquelle von einem Aminsalz von Phosphorsäure, einem Aminsalz einer Polyphosphorsäure, einem Ammoniumsalz von Phosphorsäure oder einem Ammoniumsalz einer Polyphosphorsäure abgeleitet ist.

12. Zusammensetzung gemäß einem der vorhergehenden Ansprüche, wobei die Stickstoffquelle in einer Menge von weniger als 7,5 Gewichtsprozent Stickstoff, bezogen auf das Gesamtgewicht der Zusammensetzung, vorliegt.

13. Zusammensetzung gemäß einem der vorhergehenden Ansprüche, wobei die Phosphorquelle in einer Menge von weniger als 3,8 Gewichtsprozent Phosphor, bezogen auf das Gesamtgewicht der Zusammensetzung, vorliegt.

14. Ein Artikel, beinhaltend mindestens eine Komponente, die aus der Zusammensetzung gemäß einem der Ansprüche 1 bis 9 gebildet ist.

15. Eine Zusammensetzung, die Folgendes beinhaltet:
A) ein kristallines isotaktisches Propylenhomopolymer mit einem Biegemodul von mehr als 1930 MPa und einer HDT von mehr als 100 °C;
B) ein Ethylen/α-Olefin-Interpolymer mit einer Tg von weniger als -30 °C, einem Tan-Delta, gemessen bei 0,1 rad/s bei 190 °C von weniger als 3, und
C) eine Stickstoffquelle und eine Phosphorquelle und eine Hydroxylquelle, und wobei mindestens eine Quelle von mindestens einer organischen Verbindung oder einem Salz davon abgeleitet ist, und
wobei das Gewichtsverhältnis von Homopolymer zu Interpolymer (A:B) zwischen 9:1 und 6:4 liegt.

## Revendications

1. Une composition polyoléfinique comprenant :
A) un homopolymère de propylène isotactique cristallin ayant un module de flexion supérieur à 1 930 MPa et une TFC supérieure à 100 °C ;
B) un interpolymère d'éthylène/α-oléfine ayant une Tg inférieure à - 30 °C, une tan delta mesurée à 0,1 radian/s à 190 °C inférieure à 2, une TFC qui est supérieure, ou égale, à la température de fusion maximale de l'interpolymère d'éthylène/a-oléfine, mesurée par calorimétrie différentielle à balayage, et
C) une charge lamellaire ; et
D) une source d'azote et une source de phosphore, une source au moins étant dérivée d'au moins un composé organique, ou sel de celui-ci, et
dans laquelle le rapport en poids homopolymère/interpolymère (A/B) se situe entre 9/1 et 6/4.

2. La composition de la revendication 1, la composition ayant une température de fléchissement sous charge (TFC) supérieure à 100 °C et un module de flexion supérieur à 1 930 MPa.

3. La composition de la revendication 1, dans laquelle la source d'azote est dérivée de la mélamine, de l'acide isocyanurique, d'un isocyanate ou d'une triazine.

4. La composition de la revendication 1, dans laquelle la source d'azote est dérivée d'au moins un composé organique sélectionné dans le groupe consistant en mélamine, cyanurate de mélamine, borate de mélamine, phosphate de mélamine, polyphosphate de mélamine, pyrophosphate de mélamine, éthylène diamine et tris (hydroxyéthyl) isocyanurate.

5. La composition de la revendication 1, dans laquelle la source de phosphore est dérivée d'au moins un composé sélectionné dans le groupe consistant en polyphosphate d'ammonium, diphénylphosphate de bis-phénol A, phosphate de mélamine, polyphosphate de mélamine et pyrophosphate de mélamine.

6. La composition de la revendication 1, dans laquelle la source d'azote et la source de phosphate sont toutes deux dérivées d'au moins un composé sélectionné dans le groupe consistant en polyphosphate d'ammonium, phosphate de mélamine, polyphosphate de mélamine, phosphate d'éthylènediamine et pyrophosphate de mélamine.

7. La composition de la revendication 1, comprenant en outre au moins un composé contenant un hydroxyle.

8. La composition de la revendication 7, dans laquelle le composé contenant un hydroxyle est sélectionné dans le groupe consistant en pentaérythritol, dipentaérythritol, et tris (hydroxyéthyl) isocyanate.

9. La composition de la revendication 1, dans laquelle le pourcentage en poids de charge, rapporté au « poids cumulé de l'homopolymère de propylène, de l'interpolymère d'éthylène/α-oléfine et de la charge », est supérieur au pourcentage en poids de l'interpolymère d'éthylène/α-oléfine, rapporté au « poids cumulé de l'homopolymère de propylène et de l'interpolymère d'éthylène/α-oléfine ».

10. La composition de n'importe lesquelles des revendications précédentes, dans laquelle la source de phosphore est dérivée d'au moins un composé sélectionné dans le groupe consistant en un composé phosphate, un composé phosphinate, un composé phosphonate, un composé polyphosphate, et un oxyde de phosphine.

11. La composition de n'importe lesquelles des revendications précédentes, dans laquelle la source d'azote et/ou la source de phosphore est dérivée d'un sel d'amine de l'acide phosphorique, d'un sel d'amine d'un acide polyphosphorique, d'un sel d'ammonium de l'acide phosphorique, ou d'un sel d'ammonium de l'acide polyphosphorique.

12. La composition de n'importe lesquelles des revendications précédentes, dans laquelle la source d'azote est présente dans une quantité inférieure à 7,5 pour cent en poids d'azote, rapporté au poids total de la composition.

13. La composition de n'importe lesquelles des revendications précédentes, dans laquelle la source de phosphore est présente dans une quantité inférieure à 3,8 pour cent en poids de phosphore, rapporté au poids total de la composition.

14. Un article comprenant au moins un composant formé à partir de la composition de n'importe lesquelles des revendications 1 à 9.

15. Une composition comprenant ce qui suit :
A) un homopolymère de propylène isotactique cristallin ayant un module de flexion supérieur à 1 930 MPa et une TFC supérieure à 100 °C ;
B) un interpolymère d'éthylène/α-oléfine ayant une Tg inférieure à - 30 °C, une tan delta mesurée à 0,1 radian/s à 190 °C inférieure à 3, et
C) une source d'azote et une source de phosphore et une source d'hydroxyle, une source au moins étant dérivée d'au moins un composé organique, ou un sel de celui-ci, et
dans laquelle le rapport en poids homopolymère/interpolymère (A/B) se situe entre 9/1 et 6/4.
